# EUROPEAN PATENT APPLICATION

(11) **EP 4 725 903 A1**
(43) Date of publication of application: **15.04.2026**
(21) Application number: 24205447.6
(22) Date of filing: 09.10.2024
(51) Int. Cl.: C01B 33/02, C01B 33/023, C01B 33/12, C01B 33/18, C08J 3/12, H01M 4/134, H01M 4/36, H01M 4/38, H01M 4/62

(54) **POROUS SILICON COMPOUND**

(71) Applicant: Covestro (Netherlands) B.V., 6167 RD Geleen (NL)
(72) Inventor: Reardon, Damien, 5658AT Eindhoven (NL)
(74) Representative: Levpat

(57) **Abstract**

The present invention relates to a method for producing a porous silicon compound comprising the step of
heating silica nanostructures in a reactor filled with an inert gas or a reducing gas mixture to a temperature in the range of from 500 to 900°C in the presence of a reducing agent,
wherein the silica nanostructures are core-shell nanoparticles with a particle size of 200 nm or less, a shell with a thickness in the range of 1 to 50 nm comprising silica and a core comprising latex or a polyampholyte.

## Description

The invention relates to a method for preparing a porous silicon compound, a porous silicon compound obtained by said method as well as the use of the porous silicon compound in the preparation of battery anodes.

Lithium-ion batteries were commercially introduced in the early 1990's, since then continuous improvements resulted into increased capacity, cycle stability and improved safety. The battery capacity is currently limited by the graphite anode which has a theoretical maximum capacity of 372 mAh/g. A large improvement in capacity is possible when silicon is used as anode material, the theoretical maximum capacity which can be obtained with a silicon anode is 4200 mAh/g.

Despite the potential large increase in capacity the use of silicon as anode material is not trivial due to the large volume change upon charge/discharge of about 300%. The volume changes cause battery malfunction due to material cracking, pulverization or delamination, furthermore silicon anodes are prone to the formation of a solid electrolyte interface which reduces performance.

The preparation of anode material by reduction of silica to silicon is known. For example, US 2022/041454 discloses the preparation of nanostructured silicon-carbonaceous composite material by magnesiothermic reduction and for use as anode for lithium-ion batteries. The silicon-carbonaceous composite material is obtained by reduction of the silica in a metal organic framework/ silica intermediate. The nanostructured silicon-carbonaceous composite material of US 2022/041454 comprises high amounts of silicon nanoparticles within a matrix based on silicon carbide and/or graphite.

Further, CN108172783 discloses the coating of silicon microspheres with graphene by spraying pyrolysis and the reduction of the silicon to silica by magnesiothermic reduction. A silicon/silica/graphene composite was obtained with a matrix based on an agglomerate of silica particles.

US 2022/041454 and CN108172783 do not disclose the use of the specific core-shell nanoparticles of the invention with a shell comprising silica and a core comprising latex or a polyampholyte. Further, the porous silicon compound of the present invention comprises a continuous silicon matrix with different pore sizes.

The present invention has the objective of providing a method for producing a porous silicon compound with a continuous silicon matrix which is preferably free of silicon nanoparticles and preferably comprises nano-, meso- and micropores.

Accordingly, a method for producing a porous silicon compound comprising the step of heating silica nanostructures in a reactor filled with an inert gas or a reducing gas mixture to a temperature in the range of from 500 to 900°C in the presence of a reducing agent,
wherein the silica nanostructures are core-shell nanoparticles with a particle size of 200 nm or less, a shell with a thickness in the range of 1 to 50 nm comprising silica and a core comprising latex or a polyampholyte.

The silica nanostructures used in the inventive method are core-shell nanoparticles. The core-shell nanoparticles comprise a core template which is prepared from a polyampholyte or a latex and a shell comprising silica.

The core template for preparing the core-shell particles according to the invention are prepared by micelles wherein the micelle is either obtained by a polyampholyte as surfactant which is filled with an apolar solvent or is the latex which is dispersed in water by way of a micelle. These preparation methods are for example disclosed in WO 2009/030703 A2 and WO 2013/174753 A1.

As used herein, the term `latex' refers to stabilized suspension of polymeric particles. Preferably the suspension is an emulsion. Preferably the latex is cationic. The cationic group may be incorporated into the polymer or may be added in any other form such as, for example, by the addition of a cationic surfactant. Preferably the cationic groups are at least partially bound to the polymer. Preferably the cationic groups are incorporated into the polymer during polymerization.

Preferably the latex comprises a polymer and cationic surfactant. Preferably, the surfactant comprises at least one or more ammonium functional groups. The latex preferably comprises an aqueous cationic vinyl polymer. More preferably, the latex comprises a polymer comprising styrene monomers, (meth)acrylic monomers, copolymers or combinations thereof.

In another preferred embodiment, the latex comprises a polymer as core template and a polyampholyte with pendant nitrogen groups that can quaternize to form a cation. In this embodiment, the latex is prepared by the polyampholyte forming the micelle and thus dispersing the polymer as core template.

The polyampholyte is an organic copolymer, comprising at least one monomer unit having a cationic charge, at least one monomer unit having an anionic charge, and optionally at least one neutral or non-ionic comonomer. Preparation of suitable polyampholytes is known from prior art, e.g., from US4749762 and US6361768.

In the method according to the invention the polyampholyte is preferably a copolymer obtained from
- at least one cationic or basic monomer (M1), including compounds with a pending group that can combine with a proton, like monomers with a tertiary amine group,
- at least one anionic or acidic monomer (M2), including compounds with a pending group that can yield a proton; like monomers containing carboxylic acid groups,
- at least one neutral or non-ionic monomer (M3), preferably a non-water soluble or hydrophobic comonomer; and
- optionally at least one cross-linking monomer (M4).

The ionic comonomers M1 and M2 will increase solubility and dispersibility of the copolymer in an aqueous system; whereas presence of non-ionic monomer units M3 may reduce solubility but promote forming aggregates. Too high an amount of M3 may result in insolubility and/or precipitation of the copolymer. The type and amount of M3 is thus preferably chosen such that the polymer can still be dispersed in an aqueous medium into colloidal particles, M3 units promoting self-association by nonpolar or hydrophobic interaction. Optionally, the copolymer may comprise a small amount of di- or polyfunctional monomer M4, which will induce a level of cross-linking that may further stabilize the colloidal particles formed. Typically, such random copolymers can already form suitable aggregates in an aqueous medium; thus, omitting the need to use more complex synthetic routes of making block copolymers.

In a preferred embodiment, the polyampholyte used in the method according to the invention is such a copolymer obtained from
- 0.1-40 mole% of at least one monomer M1,
- 0.1-40 mole% of at least one monomer M2,
- 18-98.8 mole% of at least one monomer M3, and
- 0-2 mole% of at least one monomer M4,
with the sum of M1, M2, M3 and M4 adding up to 100%.

Preferably, the polyampholyte is a cationic copolymer, more specifically such a cationic copolymer obtained from
- 5-40 mole% of at least one monomer M1,
- 0.5-20 mole% of at least one monomer M2,
- 38-94.5 mole% of at least one monomer M3, and
- 0-2 mole% of at least one monomer M4,
with the polyampholyte comprising more M1 than M2 monomer units and having a net positive charge.

Cationic monomers M1 that can be suitably used in forming the polyampholyte used in the method according to the invention include vinyl monomers with a pending amino functional group, which can be non-ionic monomers that can be neutralized during or after forming the copolymer, monomers with an already neutralized amino functional group, or vinyl monomers with a permanent quaternary ammonium group.

Examples of vinyl monomers bearing non-ionic amino functional groups include N,N-dimethylaminoethyl (meth)acrylate, N,N-dimethylaminohexyl (meth)acrylate, N,N-diethylaminoethyl (meth)acrylate, N-methyl-N-butyl-aminoethyl (meth)acrylate, tert-butylaminoethyl (meth)acrylate, N,N-dimethylaminopropyl (meth)acrylate, 2-(1,1,3,3,-tetramethylbutylamino)ethyl (meth)acrylate, beta-morpholinoethyl (meth)acrylate, 4-(beta-acryloxyethyl) pyridine, vinylbenzylamines, vinylphenylamines, 2-vinylpyridines or 4-vinylpyridines, p-aminostyrenes, dialkyaminostyrenes such as N,N,-diaminomethylstyrene, substituted diallylamines, N-vinylpiperidines, N-vinylimidazole, N-vinylimidazoline, N-vinylpyrazole, N-vinylindole, N-substituted (meth)acryl amides like 2-(dimethylamino)ethyl (meth)acrylamide, 2-(t-butylamino)ethyl (meth)acrylamide, 3-(dimethylamino)propyl (meth)acrylamide, (meth)acryl amide, N-aminoalkyl (meth)acrylamides, vinyl ethers like 10-aminodecyl vinyl ether, 9-aminooctyl vinyl ether, 6-(diethylamino)hexyl vinyl ether, 5-aminopentyl vinyl ether, 3-aminopropyl vinyl ether, 2-aminoethyl vinyl ether, 2-aminobutyl vinyl ether, 4-aminobutyl vinyl ether, 2-dimethylaminoethyl vinyl ether, N-(3,5,5,-triethylhexyl)aminoethyl vinyl ether, N-cyclohexylaminoethyl vinyl ether, N-tert-butylaminoethyl vinyl ether, N-methylaminoethyl vinyl ether, N-2-ethylhexylaminoethyl vinyl ether, N-t-octylaminoethyl vinyl ether, beta-pyrrolidinoethyl vinyl ether, or (N-beta-hydroxyethyl-N-methyl) aminoethyl vinyl ether. Cyclic ureido or thiourea containing ethylenically unsaturated monomers like (meth)acryloxyethyl ethyleneurea, (meth)acryloxyethyl ethylenethiourea (meth)acrylamide ethyleneurea, (meth)acrylamide ethylenethiourea and alike can also be used. Preferred monomers are amino-functional (meth)acrylates and (meth)acrylamides; especially N,N,-dialkylaminoalkyl (meth)acrylates, more specifically t-butylaminoethyl methacrylate, dimethylaminopropyl methacrylate, dimethylaminoethylmethacrylate (DMAEMA) or diethylaminoethyl methacrylate (DEAEMA), more preferably DMAEMA and DEAEMA.

The above given examples of suitable and preferred non-ionic M1 monomers can also be used in their ionized form, by treating with for example an acid, preferably an organic acid like a carboxylic acid, prior to polymerization.

Suitable examples of M1 monomers with a permanent quaternary ammonium group include methacrylamidopropyl trimethylammonium chloride (MAPTAC), diallyl dimethyl ammonium chloride (DADMAC), 2-trimethyl ammonium ethyl methacrylic chloride (TMAEMC) and quaternary ammonium salts of substituted (meth)acrylic and (meth)acrylamido monomers.

Anionic or acidic monomers M2 that can be suitably used in forming the polyampholyte used in the method according to the invention include vinyl monomers with a pending phosphoric, sulfonic, or carboxylic acid group. Preferably vinyl monomers with a carboxylic acid group are used, examples including ethylenically unsaturated monocarboxylic and/or dicarboxylic acids, like fumaric acid, itaconic acid, maleic acid, and especially (meth)acrylic monomers with a carboxylic acid group, such as acrylic acid (AA), methacrylic acid (MAA) and β-carboxy ethylacrylate. Preferred M2 monomers are acrylic acid and methacrylic acid.

Neutral or non-ionic monomers M3 that can be suitably used in forming the polyampholyte used the method according to the invention include a wide range of ethylenically unsaturated monomers or vinyl monomers, including various styrenic, (meth)acrylic, olefinic, and/or vinylic comonomers. The at least one monomer M3 may be hydrophilic or hydrophobic, or a mixture of both. Preferably, the ampholytic copolymer comprises a certain amount of non-water soluble or hydrophobic comonomers, which will promote the copolymer, not being fully water soluble, to self-assemble into colloidal particles or aggregates in an aqueous medium. The skilled person will be able to select suitable combinations of monomers and their contents based on the information disclosed in this description and experiments, possibly assisted by some further experiments; and depending on copolymer composition (like M1 and M2 types and amounts) and conditions (like solvent composition, temperature, pH).

Suitable styrene monomers M3 include styrene, α-methyl styrene and other substituted styrenes. Suitable (meth)acrylic monomers M3 include alkyl or cycloalkyl (meth)acrylates, preferably C1 - C18 alkyl (meth)acrylates or C1 - C8 alkyl (meth)acrylates, like methyl (meth)acrylate, ethyl (meth)acrylate, butyl (meth)acrylate (all isomers), isobutyl (meth)acrylate, 2-ethylhexyl (meth)acrylate, isopropyl (meth)acrylate, propyl (meth)acrylate (all isomers). Most preferred (meth)acrylic monomers include methyl methacrylate (MMA), ethyl methacrylate (EMA), n-butyl methacrylate (BMA). Similarly, N-alkyl (meth)acrylamides can be used as monomer M3. Also, other monomers that can be copolymerized with M1 and M2 can be used as monomer M3, including acrylonitrile, methacrylonitrile, butadiene; vinyl monomers like vinyl chloride, vinyl pyrrolidone, vinyl esters such as vinyl acetate, vinyl propionate, vinyl laurate, vinyl alkyl ethers, and the like.

Suitable examples of di- or polyfunctional monomer M4 include allyl methacrylate, divinyl benzene, ethyleneglycol di(meth)acrylate, butanediol di(meth)acrylate, trimethylolethane tri(meth)acrylate and trimethylolpropane tri(meth)acrylate. Preferably a difunctional monomer is used, preferably in amount of 0-1 mole% based on the polyampholyte.

In the method according to the invention the molar mass of the polyampholyte can vary widely. Typically, the polyampholyte is a copolymer having a weight averaged molar mass (M_{w}) in the range 1-500 kg/mol, preferably M_{w} is at least 2, 5, 10, 15 or even 20 kg/mol, but at most 250, 200, 150, 100, 50 or even 35 kg/mol to optimize colloidal aggregate formation. The molar mass of the copolymer can be determined by gel permeation chromatography (GPC) using polymethylmethacrylates of known molar masses as a standard and hexafluoroisopropanol as a solvent.

For preparing the core-shell nanoparticles, the latex or polyampholyte are used as an aqueous dispersion as a template for preparing the core-shell nanoparticles. For example, if a cationic polyampholyte is prepared by solution polymerization, the resulting solution can be, optionally after partially removing solvent, dispersed into an acidic solution of e.g., formic acid in water, typically at ambient conditions. In case of an anionic polyampholyte, a pH of above 7 is preferred for dispersing. Formation of colloidal particles or aggregates, e.g., by self-association of the polyampholyte in the aqueous system, can be monitored by various techniques; for example, by Dynamic Light Scattering (DLS). The aqueous medium may comprise organic solvents that are miscible with or at least can be dissolved in water, like alcohols, ketones, esters, or ethers. Examples include 1,4-dioxane, acetone, diethylacetate, propanol, ethanol, methanol, butanol, methyl ethyl ketone, methyl propylketone, and tetrahydrofuran. Preferably, the solvent comprises water and a lower (C1-C8) aliphatic alcohol, like methanol, ethanol, iso-propanol or 1-methoxypropan-2-ol; more preferably ethanol or iso-propanol. The amount of organic solvent used is chosen such that the copolymer is dispersed rather than dissolved. Preferably the solvent composition of the aqueous medium is also suitable for the subsequent step of forming a shell layer.

If desired, in the method according to the invention a further surfactant may be present, to ease formation of dispersed copolymer aggregates and to further stabilize the dispersion obtained. The surfactant used may be non-ionic, cationic or anionic, or a combination thereof depending on the type of polyampholyte and conditions, like pH. Preferably only small amount of surfactant is used, like 0.1 - 1.5, preferably 0.2 - 1.0 mass%.

In the method according to the invention the polyampholyte dispersion can have a concentration within wide ranges, for example from 1 - 45 mass%, preferably or 2 -40 mass%, more preferably 10 - 25 mass% (polymer based on dispersion).

The average particle size of the core particles or aggregates as obtained and as measured by DLS may vary widely, for example from 5 to 198 nm. Preferably the average size of the colloidal particles is at least about 10, 15, 20, 25, or 30, and at most about 198, 148 120, 100, 80 or 50 nm.

Particle size is found to be not only dependent on molecular composition, block length or charged copolymer of the polyampholyte or latex, but also on the dispersion conditions, like solvent composition, concentration of polyampholyte or latex, pH, temperature, salt concentration, etc.

The formation of the shell comprising silica on the core to obtain core-shell nanoparticles is typically carried out by a sol-gel process. Suitable inorganic oxide precursors to obtain such a shell include metal salts, metal chelates and organo-metallic compounds, preferably metal alkoxides, and combinations thereof. Within the present application silicon (Si) is considered to be a metal.

Preferred precursors include alkoxy silanes like tetramethoxy silane (TMOS), tetraethoxy silane (TEOS), methyltrimethoxy silane, methyltriethoxy silane. Such precursor compounds can have been partially pre-reacted or pre-hydrolysed to form oligomeric species, typically in the form of nano-sized particles of about 1-20 nm; also called sol particles.

In a preferred embodiment of the invention, the at least one inorganic precursor comprises an alkoxy silane, more preferably TMOS and/or TEOS.

In the method according to the invention the step of forming a shell from the precursor on the core template to result in core-shell nanoparticles is typically performed under mild conditions and in aqueous medium. As mentioned above, the aqueous medium may comprise an organic solvent that is miscible with water, like alcohols, ketones, esters, or ethers; preferably an alcohol like methanol, ethanol or iso-propanol. Water serves as solvent or diluent for the composition but may also react with the inorganic oxide precursor; for example, with an alkoxy silane.

The amount of water present in the composition is therefore preferably at least the amount needed for such desired reaction(s), like (partial) hydrolysis of for example tetraethoxy silane. In case complete hydrolysis of TEOS would be aimed at, the composition should contain water in at least a 4:1 molar ratio to Si. The temperature is not very critical in the process of the invention and can be varied widely as long as the polyampholyte or latex dispersion is not disrupted. Temperature can be up to 100 °C, but is typically ambient, i.e., from about 15 to 40 °C.

As said hydrolysis reaction is exothermic, cooling may be used to control temperature in this step. The pH is chosen in acidic or basic range, dependent on the type of polyampholyte or latex: for example, in case of a cationic polyampholyte the pH is in the range 2-6, preferably 3-5 or 3-4.5, if an anionic polyampholyte is used pH is about 8-12, preferably 9-11 or 9-10. An advantage of applying such conditions is that nanoparticles formed from the precursor and typically having a charge, will at least partly deposit on the colloidal polyampholyte or latex particles of opposite charge. This way an open or 'fluffy', or even more condensed layer of inorganic oxide (precursor) may form around the polyampholyte or latex particles.

In the method according to the invention forming a shell from the precursor on the template is typically performed at a mass ratio of inorganic oxide to organic template of about 0.25 to 5, preferably 0.5 - 2, more preferably 1 - 1.8.

In the method according to the invention forming of a shell from the precursor on the template may be monitored by measuring change in dimensions of the colloidal particles, e.g., by DLS.

In embodiments of the method according to the invention the structure of the shell formed, like its density or surface properties, may be further optimized by extending reaction time, reacting with a coupling agent or other treatment as known from the art. Thickness of the shell layer thus formed is in the range of 1 to 50 nm, preferably 10 to 30 nm. Shell thickness of core-shell nanoparticles, and their morphology can be assessed on particles with techniques like TEM, especially cryo-TEM, SAXS, SANS, or AFM.

The core-shell nanoparticles made with the method according to the invention have an average particle size of 150 nm or less, preferably an average particle size of 5 to 100 nm, more preferably 25 to 100 nm. Particle size is defined as 0.5 x (length + width) for non-spherical particles and as the diameter for spherical particles. The average size of the particles may be determined by spreading a dilute suspension of the particles over a surface and measuring the sizes of individual particles by using microscopic techniques, preferably electron microscopy (SEM or TEM) or atomic force microscopy (AFM) on a certain number, like 100 of dry particles, or by Dynamic Light Scattering (DLS) on dispersions.

For the preparation of the inventive porous silica compound the core-shell nanoparticles are typically dried and ground to powder. If the powder is stored longer than a week, it is preferably dried again under 50 mbar or less and a temperature in the range of from 100 to 200°C. If the core of the core-shell nanoparticles should be partially removed, it is possible to increase the temperature during the drying to for example 650°C, without any reducing agent.

In a preferred embodiment, the powder of the core-shell nanoparticles is transferred at a temperature of 100°C or more into the reactor or any other container substantially free of oxygen, which means that the partial pressure of oxygen in the reactor is less than 10⁻⁵ bar. This is done for example by putting the reactor under vacuum and replacing the atmosphere with a reducing gas mixture, like 4% hydrogen in argon, or an inert gas, like nitrogen or a noble gas, like argon, or simply by flushing the atmosphere of the reactor for an extended period of time to remove any residual oxygen or water before the thermal process is initiated.

It is possible to add the reducing agent to the core-shell nanoparticles or the reactor. The reducing agent is a compound or mixture which is able to reduce silica to silicon at a temperature of 500 to 900°C, for example Mg powder, mixtures of different reducing agents or mixtures of a reducing agent with a heat sink, like NaCl, CaCl₂ or KCl. It is preferred that the reducing agent comprises at least Mg, more preferably consists of Mg. The core-shell nanoparticles and the reducing agent are heated in the reactor to a temperature in the range of from 500 to 900°C, preferably for 0.5 to 4h, more preferably 1 to 3h. The reactor is preferably flushed continuously with an inert gas.

After the thermal treatment, the porous silicon compound is obtained. The porous silicon compound comprises Si, SiC and C. It is also possible to stop the thermal treatment before all silica is reduced to silicon, resulting in a porous silicon compound further comprising silica. In an optional subsequent step, the porous silicon compound is washed with HCl or HF, thereby removing residues like MgO or silica from the porous silicon compound. The earlier the thermal treatment is stopped, the more silica remains in the porous silicon compound and removing the silica by washing with HCl or HF increases the porosity of the porous silicon compound.

In another special embodiment of the method, the core of the core-shell nanoparticles is partially removed prior to the heating in the reactor in the range of from 500 to 900°C and in the presence of a reducing agent. This may be achieved in any suitable manner at any suitable point in the production process. Preferred methods include, for example, thermal decomposition, photodegradation, solvent washing, electron-beam, laser, catalytic decomposition, and combinations thereof. In this special embodiment, it is possible to adjust the amount of SiC and/or carbon in the porous silicon compound.

The porous silicon compound has a granular structure, preferably with an average size in the range of from 1 µm to 700 µm and pore sizes in the range of from 20 to 200 nm. This porous silicon compound can be used for the preparation of battery anodes, preferably anodes of lithium-ion batteries.

### Experimental Section

Core-shell nanoparticles with a latex core, a silica shell, an average particle size of 80 nm and a porosity of 40% were ground to powder and sieved with a mesh size of 800 µm. The milled powder was further dried under vacuum at a temperature of 150°C for 48 hours, the hot material was transferred into a sealed container as quickly as possible to reduce moisture pick-up from the environment. Thermogravimetric analysis was performed which confirmed that < 1wt% of water was present in the sample.

The material was transferred into a nitrogen filled glovebag (Aldrich AtmosBag, oxygen level <0.3%) and 15.024g of the powder was mixed with 7.620g magnesium turnings (Sigma 63025) in a 30ml glass vial.

The reduction was performed in an argon flushed steel batch furnace operated at an oxygen level < 4 ppm. The reactor was continuously flushed with an argon flow of 11/min and was slowly heated to a target temperature of 650°C and kept at 650°C for about 2 hours. After the thermal treatment the porous silicon compound was obtained as black residue. Analysis via XPS (Quantera Hybrid from ULUAC-PHI(Q1), monochromatic AlKα-radiation, Θ of 45°). A spot of 100 µm (25W) was applied to analyze more individual particles. Additionally high-power mode measurements were performed with a 100 µm spot (100W) scanning across an area of 1200x500 µm to obtain more general information. The XPS showed that the obtained porous silicon compound comprised elemental silicon (binding energy Si 2p = 99.4eV), SiO₂ (binding energy Si 2p = 103.5eV), and silicon carbide (binding energy Si 2p = 100.3eV; binding energy C 1s = 283.0eV), and elemental carbon (binding energy C 1s=284.8eV).

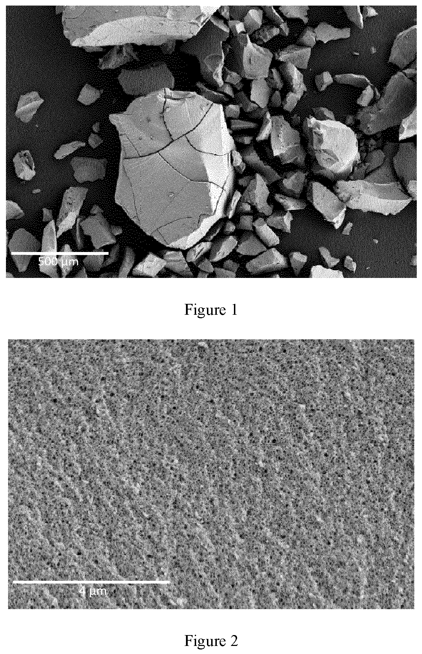

Figure 1 shows an SEM image of the obtained porous silicon compound having grain size in the range of up to 500 µm. In figure 2 a high magnification SEM image of the porous silicon compound shows the porous structure of the obtained silicon compound with measured pore sizes in the range of from 30 to 100 nm.

## Claims

1. Method for producing a porous silicon compound comprising the step of
heating silica nanostructures in a reactor filled with an inert gas or a reducing gas mixture to a temperature in the range of from 500 to 900°C in the presence of a reducing agent,
wherein the silica nanostructures are core-shell nanoparticles with a particle size of 200 nm or less, a shell with a thickness in the range of 1 to 50 nm comprising silica and a core comprising latex or a polyampholyte.

2. Method according to claim 1, wherein the core-shell nanoparticles have a particle size in the range of from 5 to 100 nm.

3. Method according to claim 1, wherein the shell has a thickness of 10 to 30 nm.

4. Method according to claim 3, wherein the core-shell nanoparticles have a particle size in the range of from 25 to 100 nm.

5. Method according to any of claims 1 to 4, wherein the reducing agent comprises at least 50 wt.-% magnesium, based on the weight of the reducing agent.

6. Method according to any of claims 1 to 5, wherein the reactor is filled with a reducing gas mixture.

7. Method according to any of claims 1 to 6, wherein the reducing gas mixture consists of hydrogen and one or more inert gases.

8. Method according to any of claims 1 to 7, wherein the range of the temperature is of from 550 to 750 °C and the reactor gas atmosphere is filled with an inert gas or reducing gas with a partial pressure of oxygen less than 10⁻⁵ bar.

9. Method according to any of claims 1 to 8, wherein in a subsequent step the obtained porous silicon compound is washed with HCl or HF.

10. Method according to any of claims 1 to 9, wherein the reactor is flushed with an inert gas.

11. Porous silicon compound obtained by a method according to any of claims 1 to 10.

12. A compound according to claim 11, wherein the compound consists of silicon, silicon carbide and carbon.

13. A compound according to claim 11 or 12, wherein the compound has a granular structure with an average size in the range of from 1 µm to 700 µm.

14. A compound according to any of claims 11 to 14, wherein the compound has pore sizes in the range of from 20 to 300 nm.

15. Use of a porous silicon compound according to any of claims 11 to 14 for preparation of a battery anode.
